# EUROPEAN PATENT SPECIFICATION

(11) **EP 4 409 128 B1**
(45) Date of publication and mention of the grant of the patent: **17.09.2025**
(21) Application number: 21789615.8
(22) Date of filing: 29.09.2021
(51) Int. Cl.: F02M 55/00, F02M 55/02, F16L 23/16

(54) **A SEALED COUPLING BETWEEN TWO BODY PARTS OF A FUEL SYSTEM AND A PRESSURE ACCUMULATOR FOR A FUEL SYSTEM OF AN INTERNAL COMBUSTION PISTON ENGINE**
ABGEDICHTETE VERBINDUNG ZWISCHEN ZWEI KÖRPERTEILEN EINES KRAFTSTOFFSYSTEMS UND EINEM DRUCKSPEICHER FÜR EIN KRAFTSTOFFSYSTEM EINES VERBRENNUNGSKOLBENMOTORS
ACCOUPLEMENT ÉTANCHE ENTRE DEUX PARTIES DE CORPS D'UN SYSTÈME DE CARBURANT ET ACCUMULATEUR DE PRESSION POUR UN SYSTÈME DE CARBURANT D'UN MOTEUR À PISTON À COMBUSTION INTERNE

(43) Date of publication of application: 07.08.2024
(73) Proprietor: Wärtsilä Finland Oy, 65100 Vaasa (FI)
(72) Inventor: EKLUND, Kjell, 65100 Vaasa (FI); NYBERG, Mikael, 65100 Vaasa (FI)
(74) Representative: Genip Oy
(86) International application number: PCT/EP2021/076749
(87) International publication number: WO 2023/051900

(56) References cited:
- EP-A2- 0 094 549
- JP-A- 2004 190 665
- JP-A- 2016 088 200
- US-B1- 6 394 507

## Description

### Technical field

The present invention relates to sealed coupling between two body parts of a fuel system of an internal combustion piston engine, where fuel temperature, when in use, is lower than temperature of surroundings of the body parts, the body parts having an internal space for the fuel according to the preamble of claim 1.

The present invention relates to a pressure accumulator for a fuel system of an internal combustion engine.

### Background art

Invention relates fuel systems of internal combustion engines. Recently the interest in using of fuels which result less harmful exhaust gas emissions when combusted in an internal combustion piston engine has risen. Currently the most promising fuels for large engines, for example in marine vessels or power plants, are such that the fuels are gaseous in normal atmospheric temperature and pressure but storing of such fuels is advantageously done in liquid form. Such fuels are for example Liquefied Natural Gas, Liquefied Petrol Gas, Ammonia, Hydrogen and Methanol, just to mention of few.

When the fuel in such fuel system is at lower temperature, often considerably lower, say tens of Celsius degrees lower, the circumstances and requirements of sealing of body parts of such system do not follow the rules of traditional liquid fuel systems designed for example for heavy fuel oil, light fuel or marine fuel oil, or the like, where the fuel is often at substantially higher temperature than the surroundings. In practical applications where the fuel is considerably lower than temperature of the surroundings, during installation, and when the fuel system is not in use, its components are warmed up to the prevailing temperature of the surroundings. In these circumstances clearance between parts increase due to thermal expansion. However, when the fuel system is prepared for use low temperature fuel, the components cool down, and in the operational circumstances clearance between parts of the fuel system tend to increase inherently due to thermal contraction and tightness of coupling is jeopardized.

Therefore, an object of the invention to provide a reliable solution for sealing of a coupling between fuel system body parts, such as a pipe or a component of a fuel system for use in practical applications where the fuel temperature is lower than the temperature of surroundings of the housing. Document EP 0 094 549 A shows a sealed coupling.

### Disclosure of the Invention

Objects of the invention can be met substantially as is disclosed in the independent claims and in the other claims describing more details of different embodiments of the invention.

According to the invention a sealed coupling between two body parts of a fuel system for an internal combustion piston engine, where fuel temperature, when in use, is lower than temperature of surroundings of the body parts, the body parts having an internal space for the fuel, which space is cylindrical at least in the coupling region, in the sealed coupling
- the body parts comprise parallel coupling faces at their axial ends, which are brought against each other in the coupling, wherein both body parts comprise a flange which extends outwards radially from an outer surface of the body and which form a radial extension of the coupling face,
- a ring clamp is arranged around both of the flanges, and which ring clamp is provided with a radially inward extension at one of its axial ends, such that the radially inward extension is arranged to face the outer surface of the body adjacent to the flange, and the inward extension are provided with axial holes for attachment bolts, which holes are radially outside the flanges,
- at least one of the coupling faces comprises a first circular groove which has substantially quadrangle cross section, wherein a radially extending land area, parallel to the coupling face, is formed between inner wall of the cylindrical internal space in the body and radially inner wall of the first circular groove, and wherein the radial distance between inner wall of the cylindrical internal space in the body and radially inner wall of the first circular groove is less than radial width of the first circular groove,

- a sealing ring is arranged in the first circular groove,
- wherein there is an axial gap between the coupling faces in the region of the radially extending the land area.

The sealed coupling provides a solution for a high-pressure fuel system for an internal combustion piston engine, where fuel temperature is considerably low. Even if when the fuel system is prepared for use, and thereafter used by introducing fuel into the fuel system, and its components cool down to tens of Celsius degrees lower than the ambient temperature, the present invention provides a sealed coupling which minimizes a risk of leakage of fuel.

According to an embodiment of the invention at least one of the coupling faces of the body part comprises a second circular groove radially outside the first groove.

According to an embodiment of the invention at least one of the body parts comprises a conduit arranged to open into the second circular groove when the coupling faces are brought against each other.

According to an embodiment of the invention both of the coupling faces of the body parts comprises a second circular groove radially outside the first groove, and one of the body parts comprises a conduit arranged to open into the second circular groove when the coupling faces are brought against each other.

According to an embodiment of the invention in the coupling, when in use, radially outmost regions of the flanges are axially pressed against each other by the ring clamps, forming an outer seal in which the seal area extends radially from radially outer edge of the second groove to the periphery of the flange.

According to an embodiment of the invention radial length of the flange is less than or equal to radial thickness of the wall of the body part. This way the coupling is advantageously clamped with the ring clamp according to the invention.

Advantageously radial length of the flange is at least 40% of radial thickness of the wall of the body, more advantageously radial length of the flange is 50 - 100% of radial thickness of the wall of the body.

According to an embodiment of the invention the flange is an integral part of the body. This makes the structure very strong and advantageous for use in fuel system for an internal combustion piston engine, where fuel temperature is lower than temperature of surroundings of the body parts.

According to an embodiment of the invention the coupling face extends radially from inner wall of the body to the radially outer edge of the flange.

According to an embodiment of the invention the coupling comprises radially successive:
land area arranged coupling face in one of the body parts, axial end of which land area is at a distance from the coupling face of the other body part;
first circular groove in said one of the body parts and a sealing ring arranged to the first circular groove;
a first hard contact region of the coupling faces;
second circular groove; and
a second hard contact region.

According to an embodiment of the invention the coupling is configured to withhold at least 3 MPa pressure, advantageously at least 20 MPa pressure.

According to an embodiment of the invention the sealing ring is made of cold resistant seal material. Such a cold resistant seal material is advantageously ultra-high molecular weight polyethylene.

According to an embodiment of the invention the sealing ring comprises a circumferential groove opening radially inwards facing the axial gap between the coupling faces in the region of the radially extending land area.

A pressure accumulator for a fuel system of an internal combustion piston engine where fuel temperature is lower than temperature of surroundings of the pressure accumulator, an accumulator comprises two body part parts having a sealed coupling between two body parts in which
- the body parts comprise parallel coupling faces at their axial ends, which are brought against each other in the coupling, wherein both body parts comprise a flange which extends outwards radially from an outer surface of the body, and which form a radial extension of the coupling face,
- a ring clamp is arranged around both of the flanges, and which ring clamp is provided with a radially inward extension at one of its axial ends, such that the radially inward extension is arranged to face the outer surface of the body adjacent to the flange, and the ring clamps are provided with axial holes for attachment bolts, which holes are radially outside the flanges,
- at least one of the coupling faces comprises a first circular groove which has substantially quadrangle cross section, wherein a radially extending land area, parallel to the coupling face, is formed between inner wall of the cylindrical internal space in the body and radially inner wall of the first circular groove, and wherein the radial distance between inner wall of the cylindrical internal space in the body and radially inner wall of the first circular groove is less than radial width of the first circular groove,
- a sealing ring is arranged in the first circular groove,
- wherein there is an axial gap between the coupling faces in the region of the radially extending the land area.

According to an embodiment of the invention the body parts are cylindrical parts each having cylindrical space for the fuel, wherein first one of the body parts comprises a fuel inlet and the second one the body parts comprise at least two fuel outlets.

The present invention provides a safe connection of body part in use with cold fuel, such as up to -50 °C and pressure up to 50MPa.

The exemplary embodiments of the invention presented in this patent application are not to be interpreted to pose limitations to the applicability of the appended claims. The verb "to comprise" is used in this patent application as an open limitation that does not exclude the existence of also unrecited features. The features recited in dependent claims are mutually freely combinable unless otherwise explicitly stated. The novel features which are considered as characteristic of the invention are set forth in particular in the appended claims.

### Brief Description of Drawings

In the following, the invention will be described with reference to the accompanying exemplary, schematic drawings, in which
Figure 1 illustrates a sealed coupling between two body parts of a fuel system of an internal combustion piston engine according to an embodiment of the invention,
Figure 2 illustrates a pressure accumulator for a fuel system of an internal combustion engine according to another embodiment of the invention.

### Detailed Description of Drawings

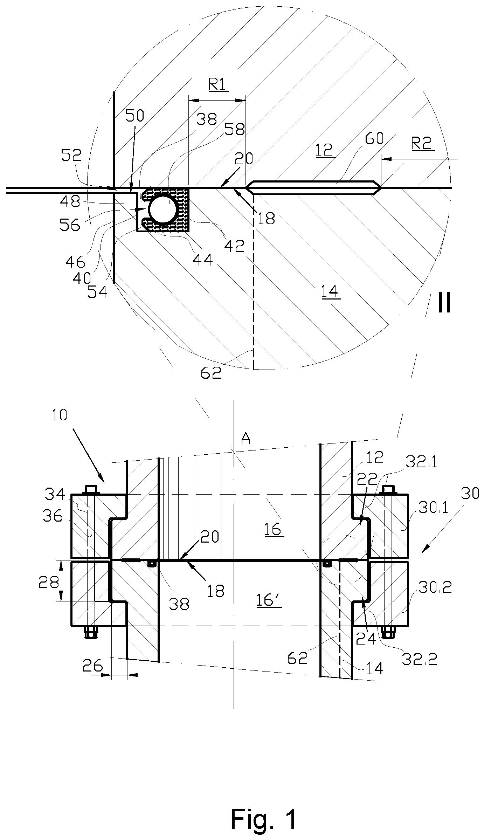

Figure 1 depicts schematically a sealed coupling between two body parts of a fuel system of an internal combustion piston engine, where fuel temperature inside the body parts, when in use, is lower than temperature of surroundings of the body parts. The coupling 10 comprises a first body part 12 and a second body part 14. Both of the body parts 12,14 are substantially hollow having an internal space 16,16' inside the body. Figure 1 shows a coupling region of the body parts 12,14 and the space and the body parts are circular in respect to a central axis A at least in the coupling region. The first body part 12 and the second body part 14 comprise circular coupling faces 18,20 at their axial ends. The coupling faces 18,20 are arranged against each other in the sealed coupling 10. The sealing face 18,20 is arranged generally perpendicular to the central axis A and the internal space in the coupling region has a diameter which is of equal size in both of the body parts.

Both of the body parts 12,14 are provided with a radial outer extension 22, 24 at their ends facing each other. The extension part has a radial length 26 from the outer surface of the body part which is advantageously smaller than axial length 28 of the extension part. The extension part extends around the body part and forms a flange for coupling the body parts with each other. The flanges are also referred to by using the numerals 22,24. The radial length 26 of the flange is advantageously also less than or equal to radial thickness of the wall of the body part. The radial length 26 of the flange is more advantageously 40-100% of the wall of the body part. Still more advantageously the radial length 26 of the flange is 50-100% of the wall of the body part. As it becomes clear from the figure 1 the flange is an integral part of the body, made of one common blank.

The sealed coupling 10 comprises further a ring clamp assembly 30 which formed of two ring clamps 30.1, 30.2. Both of the ring clamps 30.1, 30.2 of the ring clamp assembly 30 are provided with a radially inward extension 32.1, 32.2 at one of their axial ends, such that when assembled properly, the inward extensions 32.1,32.2 are the at the opposite ends of the ring clamp assembly 30. The radially inward extension is arranged to radially face the outer surface of the body adjacent to the flange 22,24.

One of the ring clamps 30.1 is arranged around one of the flanges 22 and the other one of the ring clamps 30.2 arranged around the other one of the flanges 24. Inner diameter of the radially inward extension 32.1, 32.2 in the ring clamp is smaller than outer diameter of the flange in the body part. The flanges 22 are dimensioned around the body parts 12,14 to fit inside the ring clamp, such that the radially inward extension 32.1,32.2 faces axially to the flange 22,24 of the body parts. This way the flanges 22,24 and the radially inward extensions 32.1,32.2 make it possible to axially tighten the body parts 12,14 against each other. The ring clamps are provided with axial holes 34 for attachment bolts 36 spaced around the clamp, for tightening the body part. The axial holes 34 are radially outside the flanges 32.1, 32.2 and thus the attachment bolts 36 are not in direct contact with the body part 12,14. The high contact pressure can be maintained by having bolts in separate clamps not affected by cold temperature of the fuel during operation. This is beneficial because this way fuel, which is, during normal operation of intended use, at lower temperature than temperature of surroundings of the body parts, does not considerably cool down the bolts and cause uncontrolled thermal contraction of the bolts and therefore more stable tension in the bolts during all operation conditions. The sealed coupling is applicable in practise up to -50 °C, advantageously up to -150 °C.

Another advantage of having separate clamping components at connection point is the diameter of components around cold fuel can be minimized with cost reduction from material &machining point of view.

The coupling faces 18,20 are arranged against each other in the sealed coupling 10 to form a pressure tight sealing to the coupling. The coupling faces extend generally in radial direction from inner wall of the body part to the radially outer edge of the flange. The sealing faces are, apart from one or more distinct grooves, flat and perpendicular to the axial direction of the central axis A of the space in the body parts. As can be seen in the enlarged section II of the figure 1, at least one of the coupling faces, the lower one 20 in the figure 1, comprises a first circular groove 38. The groove 38 runs around the coupling face 20 of the second body part 14 and it is located radially at a distance from inner wall 46 of the second body part 14. The first circular groove 38 is an axial detention, which is on the end face of the second body part 14. The groove 38 has substantially quadrangle, advantageously square cross section. The groove 38 has a radially inner wall 40 and a radially outer wall 42 and a bottom 44 which extends radially between the inner wall 40 and the outer wall 42.

There is a radially extending land area 48 in the second body part 14, at its axial end. The land area 48 formed between inner wall 46 of the body part 14 bordering the cylindrical internal space in the body part 14 and radially inner wall 40 of the first circular groove 38. The land area has a surface 50 at its axial end which is parallel to the coupling face 18. The radial distance between inner wall 46 of the cylindrical internal space 16,16' in the body and radially inner wall 40 of the first circular groove is less than radial width of the first circular groove 38, the radial width meaning the radial length of the bottom 44 of the first groove 38.

A sealing ring 54 is arranged to the first groove 38 axially compressed by the first body part 12 and the second body part 14. There is an axial gap 52 between the coupling faces 18,20 in the region of the radially extending the land area when the body parts 12,14 are assembled against each other for use as intended. The gap 52 results in entry of the fuel, and transmission of the pressure of the fuel from the space 16,16', into the groove 38 to effect on radially inner face of the sealing ring 54. The sealing ring comprises a circumferential groove 56, or a slot, at is inner rim, opening radially inwards. By means of the circumferential groove the sealing ring has a cross section which has generally a shape of inverted C, which opens inwardly facing the land area 48. This further increases a sealing effect of the sealing ring 54 when the pressure of the fuel spreads the sealing ring in axial direction. The cross sectional shape of the first groove 38 is adapted for facilitating the sealing effect obtained by the c-shaped sealing ring so that lips of the sealing ring are properly pressed against hard surfaces. The sealing ring is provided with an energizing spring 58 which further facilitates the sealing effect.

The sealing ring 54 is made of cold resistant seal material, such as ultra-high molecular weight polyethylene, for withholding the operational circumstances. The structure of the coupling provided with the coupling faces, flanges and the ring clamps is configured to withhold at least 3 MPa, advantageously at least 20 MPa, fuel pressure in the space 16,16'. By using a cold resistant seal that seals with assistance of internal spring and fuel pressure the main sealing function is achieved.

Radially outside of the sealing ring 54 and the first groove 35 there is radial region circumscribing the first groove 38, where there is a first hard contact region R1 between sealing surfaces 18,20 when the body parts 12,14 being coupled with each other. The first hard contact region R1 acts as a radial support for avoiding radial extrusion of the sealing ring 54. The first hard contact region can be denoted also as the first seal support surface. The support surface starts radially from the outer wall 42 of the first groove 38 and ends to a second circular groove 60, which is arranged to at least one of the body parts 12,14, more precisely to at least one of the coupling faces of the body parts. The second groove 60 is radially outside the first groove 38. At it becomes clear from the figure 1 the second groove 60 is arranged to both of the body parts 12,14. This way there is a small collection volume for possibly leaked fuel. The second body part 14 is provided with a conduit, such as a bore 62 for leading possible leaked fuel controllably to further processing, such as to a leak detector. The bore 62 is arranged to open into the second circular groove 60 when the coupling faces are brought against each other. The other end of the conduit 62 is connected to a leak detector 64. The conduit is configured such that any leaked fuel may not escape into the air in uncontrolled manner.

Radially outside the second groove 60 in the coupling, when in use, the outmost region of the flanges 22,24 are axially pressed against each other by the ring clamps 30.1,30.2 which forms a second hard contact region R2. The second hard contact region R2 extends radially from radially outer edge of the second groove 60 to the periphery of the flange 22,24. Near to outside surface of body parts there is a contact area with always high contact pressure preventing any eventual fuel leak into open air. The second hard contact region R2 may also be called as metal contact because the body parts are of metal and the sealing faces 18,20 are at direct contact with each other, without any separate flat seals.

The view II of the figure 1 shows the most effective embodiment of the invention in which the coupling comprises successively in radial direction:
The land area 48 arranged coupling face 20 in one of the body parts 14, axial end of which land area is at a distance from the coupling face of the other body part 12;
first circular groove 38 in said one of the body parts 14 and a sealing ring 54 arranged to the first circular groove 38;
a first hard contact region R1 of the coupling faces;
second circular groove 60; and
a second hard contact region R2.

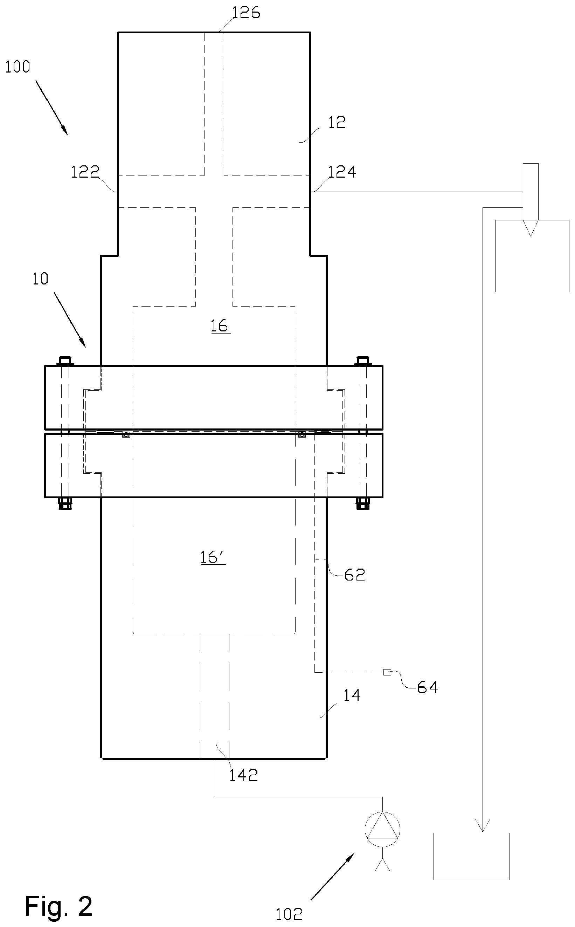

Figure 2 depicts schematically a pressure accumulator 100 for a fuel system 102 of an internal combustion piston engine where fuel temperature is lower than temperature of surroundings of the pressure accumulator. The accumulator is intended for use in high pressure part of the fuel system in which the fuel is substantially at a fuel injection pressure, that is at a pressure suitable for injecting fuel into a combustion chamber of the cylinder during compression stroke of the engine. The fuel pressure is more than maximum motoring compression pressure of the engine.

The accumulator comprises two body part parts 12,14 having a sealed coupling 10 between two body parts. The body parts are generally circular and are provided with cylindrical space 16,16' the spaces are coaxial, and they are for equal diameter. The sealed coupling which connects and seals the body parts 12,14 axially together is the sealed coupling 10 shown in and described by referring to the figure 1.

The first body part 12 comprise at least two fuel outlets 122,124 and an optional channel 126 for coupling an auxiliary device, for example a safety valve, to the accumulator. The fuel outlets are arranged in flow communication with fuel injectors of the engine. The second one of the body parts 14 comprises a fuel inlet 142 which is in flow communication with the space 16' and by means of which fuel at high pressure can be fed to the space 16'.

It also conceivable in some practical application to modify the coupling such that the first groove is made on both of the opposed sealing surfaces, even if that may be somewhat more laborious to manufacture. Also, it is conceivable that the second groove is made only one of the opposed sealing surfaces.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such combination is technically feasible.

## Claims

1. A sealed coupling (10) between two body parts (12,14) of a fuel system (102) for an internal combustion piston engine, where fuel temperature, when in use, is lower than temperature of surroundings of the body parts (12,14), the body parts (12,14) having an internal space (16,16') for the fuel, which space (16,16') is cylindrical at least in the coupling region, and
- the body parts (12,14) comprise parallel coupling faces (18,20) at their axial ends, which are brought against each other in the coupling, wherein both body parts (12,14) comprise a flange (22,24) which extends outwards radially from an outer surface of the body part (12,14), and which form a radial extension of the coupling face (18,20),
- a ring clamp (30.1,30.2) is arranged around both of the flanges (22,24), and which ring clamp (30.1,30.2) is provided with a radially inward extension (32.1, 32.2) at one of its axial ends, such that the radially inward extension (32.1, 32.2) is arranged to face the outer surface of the body part (12,14) adjacent to the flange (22,24), and the ring clamps (30.1,30.2) are provided with axial holes (34) for attachment bolts, which holes are radially outside the flanges (22,24),
- at least one of the coupling faces (18,20) comprises a first circular groove (38) which has substantially quadrangle cross section, wherein a radially extending land area (48) is formed between inner wall of the body part (12,14) and radially inner wall of the first circular groove (38), and wherein the radial distance between inner wall of the cylindrical internal space (16,16') in the body part (12,14) and radially inner wall of the first circular groove (38) is less than radial width of the first circular groove (38), and
- a sealing ring (54) is arranged in the first circular groove (38), **characterized in that**
- there is an axial gap (52) between the coupling faces (18,20) in the region between inner wall of the body part (12,14) and radially inner wall of the first circular groove (38), and that
- the sealing ring (54) comprises a circumferential groove (56) opening radially inwards
facing the axial gap (52) between the coupling faces (18,20) in the region of the radially extending land area.

2. A sealed coupling (10) between two body parts (12,14) of a fuel system (102) according to claim 1, **characterized in that** at least one of the coupling faces (18,20) of the body part (12,14) comprises a second circular groove (60) radially outside the first circular groove (32).

3. A sealed coupling (10) between two body parts (12,14) of a fuel system (102) according to claim 2, **characterized in that** at least one of the body parts (12,14) comprises conduit (62) arranged to open into the second circular groove (60) when the coupling faces (18,20) are brought against each other.

4. A sealed coupling (10) between two body parts (12,14) of a fuel system (102) according to anyone of the preceding claim 2 or 3, **characterized in that** both of the coupling faces (18,20) of the body parts (12,14) comprises a second circular groove (60) radially outside the first groove (32), one of the body parts (12,14) comprises conduit (62) arranged to open into the second circular groove (60) when the coupling faces (18,20) are brought against each other.

5. A sealed coupling (10) between two body parts (12,14) of a fuel system (102) according to claim 3, **characterized in that** in the coupling (10), when in use, radially outmost regions of the flanges (22,24) are axially pressed against each other by the ring clamps (30.1,30.2), forming an outer seal in which the seal area extends radially from radially outer edge of the second groove (60) to the periphery of the flange (22,24).

6. A sealed coupling (10) between two body parts (12,14) of a fuel system (102) according to claim 1, **characterized in that** the coupling (10) comprises radially successive:
a. land area (48) arranged to coupling face (20) in one of the body parts (14), axial end of which land area (48) is at a distance from the coupling face (18) of the other body part (18);
b. first circular groove (38) in said one of the body parts (12,14);
c. a first hard contact region (R1) of the coupling faces (18,20);
d. second circular groove (60); and
e. a second hard contact region (R2).

7. A sealed coupling (10) between two body parts (12,14) of a fuel system (102) according to claim 1, **characterized in that** radial length of the flange (22,24) is less than or equal to radial thickness of the wall of the body part (12,14).

8. A sealed coupling (10) between two body parts (12,14) of a fuel system (102) according to claim 6, **characterized in that** radial length of the flange (22,24) is 50 - 100% of radial thickness of the wall of the body part (12,14).

9. A sealed coupling (10) between two body parts (12,14) of a fuel system (102) according to anyone of the preceding claims, **characterized in that** the flange (22,24) is an integral part of the body part (12,14).

10. A sealed coupling (10) between two body parts (12,14) of a fuel system (102) according to anyone of the preceding claims, **characterized in that** the coupling face (18,20) extends radially from inner wall of the body part (12,14) to the radially outer edge of the flange (22,24).

11. A sealed coupling (10) between two body parts (12,14) of a fuel system (102) according to anyone of the preceding claims, **characterized in that** coupling (10) is configured to withhold at least 3 MPa pressure, advantageously at least 20 MPa pressure.

12. A sealed coupling (10) between two body parts (12,14) of a fuel system (102) according to claim 1, **characterized in that** the sealing ring (54) is made of cold resistant seal material.

13. A pressure accumulator in a fuel system (102) of an internal combustion piston engine where fuel temperature is lower than temperature of surroundings of the pressure accumulator, **characterized in that** an accumulator comprises two body parts (12,14) having a sealed coupling (10) between two body parts (12,14) according to anyone of the preceding claims.

14. A pressure accumulator according to claim 13, **characterized in that** the body parts (12,14) are cylindrical parts each having cylindrical space (16,16') for the fuel, wherein first one of the body parts (12) comprises at least two fuel outlets (122,124) and the second one the body parts (14) comprise a fuel inlet (142).

## Patentansprüche

1. Abgedichtete Kopplung (10) zwischen zwei Körperteilen (12, 14) eines Kraftstoffsystems (102) für einen Kolbenverbrennungsmotor, wobei eine Kraftstofftemperatur bei Verwendung niedriger ist als eine Temperatur der Umgebung der Körperteile (12, 14), wobei die Körperteile (12, 14) einen Innenraum (16, 16') für den Kraftstoff aufweisen, wobei der Raum (16, 16') mindestens in dem Kopplungsbereich zylindrisch ist, und
- die Körperteile (12, 14) an ihren axialen Enden parallele Kopplungsflächen (18, 20) umfassen, die in der Kopplung gegeneinander gebracht sind, wobei beide Körperteile (12, 14) einen Flansch (22, 24) umfassen, der sich von einer äußeren Fläche des Körperteils (12, 14) radial nach außen erstreckt und der eine radiale Verlängerung der Kopplungsfläche (18, 20) bildet,
- eine Ringklemme (30.1, 30.2) um beide Flansche (22, 24) angeordnet ist, wobei die Ringklemme (30.1, 30.2) an einem ihrer axialen Enden mit einer radial nach innen gerichteten Verlängerung (32.1, 32.2) versehen ist, so dass die radial nach innen gerichtete Verlängerung (32.1, 32.2) so angeordnet ist, dass sie der äußeren Fläche des Körperteils (12, 14) benachbart zu dem Flansch (22, 24) zugewandt ist, und die Ringklemmen (30.1, 30.2) mit axialen Löchern (34) für Anbringungsbolzen versehen sind, wobei sich die Löcher radial außerhalb der Flansche (22, 24) befinden,
- mindestens eine der Kopplungsflächen (18, 20) eine erste kreisförmige Nut (38) umfasst, die einen im Wesentlichen viereckigen Querschnitt aufweist, wobei ein sich radial erstreckender Stegbereich (48) zwischen einer inneren Wand des Körperteils (12, 14) und einer radial inneren Wand der ersten kreisförmigen Nut (38) gebildet ist, und wobei der radiale Abstand zwischen einer inneren Wand des zylindrischen Innenraums (16, 16') in dem Körperteil (12, 14) und einer radial inneren Wand der ersten kreisförmigen Nut (38) geringer ist als eine radiale Breite der ersten kreisförmigen Nut (38), und
- ein Dichtungsring (54) in der ersten kreisförmigen Nut (38) angeordnet ist,
**dadurch gekennzeichnet, dass**
- ein axialer Spalt (52) zwischen den Kopplungsflächen (18, 20) in dem Bereich zwischen einer inneren Wand des Körperteils (12, 14) und einer radial inneren Wand der ersten kreisförmigen Nut (38) vorhanden ist, und dass
- der Dichtungsring (54) eine umlaufende Nut (56) umfasst, die sich in dem Bereich des sich radial erstreckenden Stegbereichs radial nach innen zu dem axialen Spalt (52) zwischen den Kopplungsflächen (18, 20) hin öffnet.

2. Abgedichtete Kopplung (10) zwischen zwei Körperteilen (12, 14) eines Kraftstoffsystems (102) nach Anspruch 1, **dadurch gekennzeichnet, dass** mindestens eine der Kopplungsflächen (18, 20) des Körperteils (12, 14) eine zweite kreisförmige Nut (60) radial außerhalb der ersten kreisförmigen Nut (32) umfasst.

3. Abgedichtete Kopplung (10) zwischen zwei Körperteilen (12, 14) eines Kraftstoffsystems (102) nach Anspruch 2, **dadurch gekennzeichnet, dass** mindestens einer der Körperteile (12, 14) eine Leitung (62) umfasst, die so angeordnet ist, dass sie sich in die zweite kreisförmige Nut (60) öffnet, wenn die Kopplungsflächen (18, 20) gegeneinander gebracht sind.

4. Abgedichtete Kopplung (10) zwischen zwei Körperteilen (12, 14) eines Kraftstoffsystems (102) nach einem der vorhergehenden Ansprüche 2 oder 3, **dadurch gekennzeichnet, dass** beide Kopplungsflächen (18, 20) der Körperteile (12, 14) eine zweite kreisförmige Nut (60) radial außerhalb der ersten Nut (32) umfassen, wobei eines der Körperteile (12, 14) eine Leitung (62) umfasst, die so angeordnet ist, dass sie sich in die zweite kreisförmige Nut (60) öffnet, wenn die Kopplungsflächen (18, 20) gegeneinander gebracht sind.

5. Abgedichtete Kopplung (10) zwischen zwei Körperteilen (12, 14) eines Kraftstoffsystems (102) nach Anspruch 3, **dadurch gekennzeichnet, dass** in der Kopplung (10) bei Verwendung radial äußerste Bereiche der Flansche (22, 24) durch die Ringklemmen (30.1, 30.2) axial gegeneinander gepresst sind, wodurch eine äußere Dichtung gebildet ist, bei der sich der Dichtungsbereich radial von einem radial äußeren Rand der zweiten Nut (60) zu dem Umfang des Flansches (22, 24) erstreckt.

6. Abgedichtete Kopplung (10) zwischen zwei Körperteilen (12, 14) eines Kraftstoffsystems (102) nach Anspruch 1, **dadurch gekennzeichnet, dass** die Kopplung (10) radial aufeinanderfolgend umfasst:
a. einen Stegbereich (48), der an der Kopplungsfläche (20) in einem der Körperteile (14) angeordnet ist, wobei ein axiales Ende des Stegbereichs (48) von der Kopplungsfläche (18) des anderen Körperteils (18) beabstandet ist;
b. eine erste kreisförmige Nut (38) in dem einen der Körperteile (12, 14);
c. einen ersten harten Kontaktbereich (R1) der Kopplungsflächen (18, 20);
d. eine zweite kreisförmige Nut (60); und
e. einen zweiten harten Kontaktbereich (R2).

7. Abgedichtete Kopplung (10) zwischen zwei Körperteilen (12, 14) eines Kraftstoffsystems (102) nach Anspruch 1, **dadurch gekennzeichnet, dass** eine radiale Länge des Flansches (22, 24) kleiner oder gleich einer radialen Dicke der Wand des Körperteils (12, 14) ist.

8. Abgedichtete Kopplung (10) zwischen zwei Körperteilen (12, 14) eines Kraftstoffsystems (102) nach Anspruch 6, **dadurch gekennzeichnet, dass** eine radiale Länge des Flansches (22, 24) 50-100 % einer radialen Dicke der Wand des Körperteils (12, 14) beträgt.

9. Abgedichtete Kopplung (10) zwischen zwei Körperteilen (12, 14) eines Kraftstoffsystems (102) nach einem der vorhergehenden Ansprüche, **dadurch gekennzeichnet, dass** der Flansch (22, 24) ein einstückiger Teil des Körperteils (12, 14) ist.

10. Abgedichtete Kopplung (10) zwischen zwei Körperteilen (12, 14) eines Kraftstoffsystems (102) nach einem der vorhergehenden Ansprüche, **dadurch gekennzeichnet, dass** sich die Kopplungsfläche (18, 20) radial von einer inneren Wand des Körperteils (12, 14) zu dem radial äußeren Rand des Flansches (22, 24) erstreckt.

11. Abgedichtete Kopplung (10) zwischen zwei Körperteilen (12, 14) eines Kraftstoffsystems (102) nach einem der vorhergehenden Ansprüche, **dadurch gekennzeichnet, dass** die Kopplung (10) eingerichtet ist, um einem Druck von mindestens 3 MPa, vorteilhafterweise von mindestens 20 MPa, standzuhalten.

12. Abgedichtete Kopplung (10) zwischen zwei Körperteilen (12, 14) eines Kraftstoffsystems (102) nach Anspruch 1, **dadurch gekennzeichnet, dass** der Dichtungsring (54) aus kältebeständigem Dichtungsmaterial hergestellt ist.

13. Druckspeicher in einem Kraftstoffsystem (102) eines Kolbenverbrennungsmotors, bei dem eine Kraftstofftemperatur niedriger ist als eine Temperatur der Umgebung des Druckspeichers, **dadurch gekennzeichnet, dass** ein Speicher zwei Körperteile (12, 14) umfasst, die eine abgedichtete Kopplung (10) zwischen zwei Körperteilen (12, 14) nach einem der vorhergehenden Ansprüche aufweisen.

14. Druckspeicher nach Anspruch 13, **dadurch gekennzeichnet, dass** die Körperteile (12, 14) zylindrische Teile sind, die jeweils einen zylindrischen Raum (16, 16') für den Kraftstoff aufweisen, wobei ein erstes der Körperteile (12) mindestens zwei Kraftstoffauslässe (122, 124) umfasst und das zweite der Körperteile (14) einen Kraftstoffeinlass (142) umfasst.

## Revendications

1. Accouplement étanche (10) entre deux parties de corps (12, 14) d'un système de carburant (102) pour un moteur à piston à combustion interne, où la température du carburant, pendant l'utilisation, est inférieure à une température ambiante des parties de corps (12, 14), les parties de corps (12, 14) comportant un espace intérieur (16, 16') pour le carburant, ledit espace (16, 16') étant cylindrique au moins dans la région d'accouplement, et
- les parties de corps (12, 14) comprennent des faces d'accouplement (18, 20) parallèles au niveau de leurs extrémités axiales, lesquelles sont mises l'une contre l'autre dans l'accouplement, dans lequel les deux parties de corps (12, 14) comprennent un rebord (22, 24) s'étendant radialement vers l'extérieur à partir d'une surface extérieure de la partie de corps (12, 14), et formant une extension radiale de la face d'accouplement (18, 20),
- un anneau de serrage (30.1, 30.2) est agencé autour des deux rebords (22, 24), et ledit anneau de serrage (30.1, 30.2) est doté d'une extension radialement intérieure (32.1, 32.2) au niveau de l'une de ses extrémités axiales, de sorte que l'extension radialement intérieure (32.1, 32.2) est agencée pour faire face à la surface extérieure de la partie de corps (12, 14) adjacente au rebord (22, 24), et les anneaux de serrage (30.1, 30.2) sont dotés de trous axiaux (34) pour la fixation de boulons, lesdits trous étant situés radialement à l'extérieur des rebords (22, 24),
- l'une au moins des faces d'accouplement (18, 20) comprend une première rainure circulaire (38) présentant une section transversale substantiellement quadrangulaire, dans lequel une superficie s'étendant radialement (48) est formée entre une paroi intérieure de la partie de corps (12, 14) et une paroi radialement intérieure de la première rainure circulaire (38), et dans lequel la distance radiale entre la paroi intérieure de l'espace intérieur cylindrique (16, 16') dans la partie de corps (12, 14) et la paroi radialement intérieure de la première rainure circulaire (38) est inférieure à une largeur radiale de la première rainure circulaire (38), et
- une bague d'étanchéité (54) est agencée dans la première rainure circulaire (38),
**caractérisé en ce que**
- un jeu axial (52) est prévu entre les faces d'accouplement (18, 20) dans la région entre la paroi intérieure de la partie de corps (12, 14) et la paroi radialement intérieure de la première rainure circulaire (38), et **en ce que**
- la bague d'étanchéité (54) comprend une rainure circonférentielle (56) s'ouvrant radialement vers l'intérieur, tournée vers le jeu axial (52) entre les faces d'accouplement (18, 20) dans la région de la superficie s'étendant radialement.

2. Accouplement étanche (10) entre deux parties de corps (12, 14) d'un système de carburant (102) selon la revendication 1, **caractérisé en ce que** l'une au moins des faces d'accouplement (18, 20) de la partie de corps (12, 14) comprend une deuxième rainure circulaire (60) radialement à l'extérieur de la première rainure circulaire (32).

3. Accouplement étanche (10) entre deux parties de corps (12, 14) d'un système de carburant (102) selon la revendication 2, **caractérisé en ce que** l'une au moins des parties de corps (12, 14) comprend un conduit (62) agencé de manière à s'ouvrir dans la deuxième rainure circulaire (60) lorsque les faces d'accouplement (18, 20) sont mises l'une contre l'autre.

4. Accouplement étanche (10) entre deux parties de corps (12, 14) d'un système de carburant (102) selon l'une quelconque des revendications précédentes 2 ou 3, **caractérisé en ce que** les deux faces d'accouplement (18, 20) des parties de corps (12, 14) comprennent une deuxième rainure circulaire (60) radialement à l'extérieur de la première rainure circulaire (32), l'une des parties de corps (12, 14) comprend un conduit (62) agencé de manière à s'ouvrir dans la deuxième rainure circulaire (60) lorsque les faces d'accouplement (18, 20) sont mises l'une contre l'autre.

5. Accouplement étanche (10) entre deux parties de corps (12, 14) d'un système de carburant (102) selon la revendication 3, **caractérisé en ce que** dans l'accouplement (10), pendant l'utilisation, des régions des rebords (22, 24) situées le plus à l'extérieur radialement sont pressées axialement les unes contre les autres par les anneaux de serrage (30.1, 30.2), formant un joint d'étanchéité extérieur dans lequel la zone d'étanchéité s'étend radialement à partir d'un bord radialement extérieur de la deuxième rainure (60) vers la périphérie du rebord (22, 24).

6. Accouplement étanche (10) entre deux parties de corps (12, 14) d'un système de carburant (102) selon la revendication 1, **caractérisé en ce que** l'accouplement (10) comprend, successivement dans le sens radial :
a. une superficie (48) agencée sur la face d'accouplement (20) dans l'une des parties de corps (14), une extrémité axiale de ladite superficie (48) se trouvant à une distance de la face d'accouplement (18) de l'autre partie de corps (18) ;
b. une première rainure circulaire (38) dans ladite une des parties de corps (12, 14) ;
c. une première région de contact dure (R1) des faces d'accouplement (18, 20) ;
d. une deuxième rainure circulaire (60) ; et
e. une deuxième région de contact dure (R2).

7. Accouplement étanche (10) entre deux parties de corps (12, 14) d'un système de carburant (102) selon la revendication 1, **caractérisé en ce qu'**une longueur radiale du rebord (22, 24) est inférieure ou égale à une épaisseur radiale de la paroi de la partie de corps (12, 14).

8. Accouplement étanche (10) entre deux parties de corps (12, 14) d'un système de carburant (102) selon la revendication 6, **caractérisé en ce qu'**une longueur radiale du rebord (22, 24) mesure entre 50 et 100 % d'une épaisseur radiale de la paroi de la partie de corps (12, 14).

9. Accouplement étanche (10) entre deux parties de corps (12, 14) d'un système de carburant (102) selon l'une quelconque des revendications précédentes, **caractérisé en ce que** le rebord (22, 24) fait partie intégrante de la partie de corps (12, 14).

10. Accouplement étanche (10) entre deux parties de corps (12, 14) d'un système de carburant (102) selon l'une quelconque des revendications précédentes, **caractérisé en ce que** la face d'accouplement (18, 20) s'étend radialement à partir de la paroi intérieure de la partie de corps (12, 14) vers le bord radialement extérieur du rebord (22, 24).

11. Accouplement étanche (10) entre deux parties de corps (12, 14) d'un système de carburant (102) selon l'une quelconque des revendications précédentes, **caractérisé en ce que** l'accouplement (10) est configuré pur résister à une pression d'au moins 3 MPa, avantageusement à une pression d'au moins 20 MPa.

12. Accouplement étanche (10) entre deux parties de corps (12, 14) d'un système de carburant (102) selon la revendication 1, **caractérisé en ce que** la bague d'étanchéité (54) est constituée d'un matériau d'étanchéité résistant au froid.

13. Accumulateur de pression dans un système de carburant (102) d'un moteur à piston à combustion interne, où la température est inférieure à une température ambiante de l'accumulateur de pression, **caractérisé en ce qu'**un accumulateur comprend deux parties de corps (12, 14) comportant un accouplement étanche (10) entre deux parties de corps (12, 14) selon l'une quelconque des revendications précédentes.

14. Accumulateur de pression selon la revendication 13, **caractérisé en ce que** les parties de corps (12, 14) sont des parties cylindriques comportant respectivement un espace cylindrique (16, 16') pour le carburant, dans lequel une première des parties de corps (12) comprend au moins deux sorties de carburant (122, 124) et la deuxième des parties de corps (14) comprend une entrée de carburant (142).
